# EUROPÄISCHE PATENTSCHRIFT

(11) **EP 1 642 054 B1**
(45) Veröffentlichungstag und Bekanntmachung des Hinweises auf die Patenterteilung: **05.05.2010**
(21) Anmeldenummer: 04739655.1
(22) Anmeldetag: 07.06.2004
(51) Int. Cl.: F16H 63/18

(54) **SCHALTVORRICHTUNG FÜR EIN GETRIEBE**
SHIFT DEVICE FOR A TRANSMISSION
DISPOSITIF DE CHANGEMENT DE VITESSES POUR UNE BOITE DE VITESSES

(30) Priorität: 04.07.2003 DE 10330158
(43) Veröffentlichungstag der Anmeldung: 05.04.2006
(73) Patentinhaber: ZF Friedrichshafen AG, 88038 Friedrichshafen (DE)
(72) Erfinder: LÜBKE, Eckhardt, 88048 Friedrichshafen (DE); SPECK, Frank-Detlef, 88085 Langenargen (DE)
(86) Internationale Anmeldenummer: PCT/EP2004/006120
(87) Internationale Veröffentlichungsnummer: WO 2005/003603

(56) Entgegenhaltungen:
- EP-A- 1 118 803
- DE-A- 10 128 854
- DE-A- 19 509 477
- DE-A- 19 543 645

## Beschreibung

Die vorliegende Erfindung betrifft eine Schaltvorrichtung für ein Getriebe mit einem Kurventrieb, der eine um eine Achse drehbar geführte Schaltwalze aufweist, sowie Schaltfinger, die in die Nuten eingreifen und in diesen geführt werden.

Aus der Praxis sind Schaltvorrichtungen für Geschwindigkeits-Wechselgetriebe für Kraftfahrzeuge bekannt, die einen Kurventrieb zum Erzeugen der Bewegungen von Schaltgabeln aufweisen, die mit Schaltfingern verbunden sind. Die Steuerkurven des Kurventriebs sind in Form von Nuten auf dem Umfang der Schaltwalze angeordnet, wobei für jede Schaltgabel eine Steuerkurve vorgesehen ist, in die der mit der Schaltgabel verbundene Schaltfinger derart eingreift, dass beim Drehen der Schaltwalze an den Schaltfingern eine fortlaufend von einem niedrigen zu einem höheren Gang, bzw. von einem höheren Gang zu einem niedrigeren Gang verlaufende Schaltbewegung in axialer Richtung der Schaltwalze ausgelöst wird. Während der Schaltbewegung durchlaufen die Schaltgabeln jeweils eine zwischen zwei Gängen angeordnete Leerlaufposition.

Diese Schaltvorrichtungen weisen bei Mehrfach-Rückschaltungen jedoch den Nachteil auf, dass ein sequentieller Schaltablauf eingehalten werden muss. Das bedeutet, dass bei einer Mehrfach-Rückschaltung immer nur ein Gang nach dem anderen eingelegt und wieder ausgelegt wird, bis der ausgewählte Gang in dem Getriebe eingelegt ist. Die sequentielle Schaltfolge führt zu einer erheblichen Verlängerung der gesamten Schaltzeit.

Um diesen Nachteil zu überwinden, ist bei Mehrfach-Rückschaltungen dazu übergegangen worden, den ausgewählten Gang auf direktem Weg, das heißt ohne sequentiellen Schaltablauf im Getriebe einzulegen. Dazu werden die Schaltgabeln bei Mehrfach-Rückschaltungen mit Hilfe geeigneter Einrichtungen ausgehend von den dem aktuell geschalteten Gang entsprechenden Stellungen der Schaltgabeln aus dem Eingriff mit der Schaltwalze genommen und in Richtung ihrer Neutralposition geführt.

Anschließend wird die Schaltwalze so weit in Richtung der Rückschaltung verdreht, bis die für den angewählten Gang entsprechende Stellung der Schaltgabeln aus der Neutralposition der Schaltgabeln angefahren werden kann. Durch diese Vorgehensweise entfällt bei Mehrfach-Rückschaltungen das sequentielle Durchschalten jeden Ganges, wodurch bei Rückschaltungen über mehrere Gänge, das heißt bei Gangsprüngen, erheblich kürzere Schaltzeiten erreicht werden.

In der DE 195 09 477 ist eine Schaltvorrichtung beschrieben, bei der während einer Mehrfach-Rückschaltung Schaltmittel, die sich in ihrer Leerlaufposition befinden, außer Eingriff mit den Steuerkurven gebracht werden, wobei eine Bewegung der Schaltmittel in Schaltrichtung aus der Leerlaufposition heraus blockiert ist und die Schaltwalze, ohne Zwischenschaltungen im Getriebe auszulösen, in beliebige Stellungen verdrehbar ist.

Anschließend werden die Schaltmittel erneut in Eingriff mit den Steuerkurven der Schaltwalze gebracht.

Am Grund der Steuerkurven sind in Richtung der Verdrehung für die Rückschaltung der Schaltwalze überfahrbare Rampen vor den Schaltwegauslenkungen der Steuerkurven vorgesehen, wobei die Schaltfinger bei einer Mehrfach-Rück-schaltung während des Auflaufens auf diese Rampen durch eine Rasteinrichtung in Schaltrichtung blockiert sind.

Hierbei ist jedoch noch von Nachteil, dass die während des Überfahrens der Rampen für die Arretierung der mit den Schaltfingern verbundenen Schaltgabeln vorgesehene Rasteinrichtung eine aufwendige Konstruktion bedingt, die hohe Fertigungskosten verursacht, und dass eine zusätzliche Steuerung vorgesehen werden muss.

Um diesen Nachteil zu vermeiden, wurde in der DE-A-10203633 eine gattungsgemäße Schaltvorrichtung für ein Getriebe mit einem Kurventrieb vorgeschlagen, der eine mit mindestens einer Nutenbahn versehene Schaltwalze aufweist, wobei wenigstens ein Schaltfinger in die Nutenbahn derart eingreift, dass dieser bei einer Drehung der Schaltwalze axial bewegbar ist und wobei die Nutenbahn für eine Hochschaltung einen als Hochschaltnut ausgebildeten Hochschaltweg und für eine Rückschaltung einen Rückschaltweg aufweist. Der Rückschaltweg ist dabei als Rückschaltnut ausgebildet, die den Schaltfinger während einer Rückschaltung oder einer Mehrfach-Rückschaltung in einer zu einer Neutralposition äquivalenten axialen Schaltstellung führt.

Die Rückschaltnut ist mit einer in einer Hochschaltrichtung äquivalenten Drehrichtung der Schaltwalze wirkenden Sperreinrichtung versehen, so dass der Schaltfinger während einer Hochschaltung durch die Hochschaltnut geführt wird und während einer Rückschaltung durch die Rückschaltnut geführt wird.

Durch diese Ausbildung des Rückschaltweges als Rückschaltnut, die den Schaltfinger während einer Mehrfach-Rückschaltung in einer zu einer Neutralposition äquivalenten Schaltstellung führt, können Mehrfach-Rückschaltungen ohne einen sequentiellen Schaltablauf ausgeführt werden, wodurch kürzere Schaltzeiten erreicht werden.

Das Vorsehen der Sperreinrichtung in der Rückschaltnut, die in einer in einer Hochschaltrichtung äquivalenten Drehrichtung der Schaltwalze wirksam ist, führt dazu, dass der Schaltfinger während einer Hochschaltung durch die Hochschaltnut geführt wird und während einer Mehrfach-Rückschaltung in der Rückschaltnut geführt wird, so dass der Schaltfinger bei Hochschaltungen bzw. Mehrfach-Hochschaltungen über den sequentiellen Hochschaltweg geführt wird und bei Mehrfach-Rückschaltungen ein direkter Weg in die Neutralposition des Schaltfingers angefahren wird. Damit wird die angestrebte Reduzierung der Schaltzeiten bei Mehrfach-Rückschaltungen erreicht.

Bei dieser bekannten Schaltvorrichtung ist jedoch zum einen ein Mehrweg der Schaltwalze zurückzulegen und zum anderen eine Umkehrung des Drehwegs der Schaltwalze zwischen den Hochschaltungen und den Rückschaltungen erforderlich.

Schließlich ist hoch aus der EP 1 118 803 A eine Schaltvorrichtung für ein Getriebe bekannt mit einem Kurventrieb, der eine um eine Achse drehbar geführte Schaltwalze mit Nuten aufweist, sowie Schaltfinger, die in die Nuten eingreifen und in diesen geführt wreden.

Aufgabe der vorliegenden Erfindung ist es, eine Vorrichtung zu schaffen, mit der die Gänge sowohl bei Hochschaltungen als auch bei Rückschaltungen ohne sequentiellen Schaltablauf frei wählbar sind, ohne dass ein Mehrweg der Schaltwalze zurück gelegt werden muss oder eine Umkehrung ihrer Drehrichtung erforderlich ist.

Ausgehend von einer Schaltvorrichtung der eingangs näher genannten Art erfolgt die Lösung dieser Aufgabe mit den im kennzeichnenden Teil des Anspruchs 1 angegebenen Merkmalen; vorteilhafte Ausgestaltungen sind in den Unteransprüchen beschrieben.

Demnach wird vorgeschlagen, die Schaltvorrichtung mit der Schaltwalze derart auszubilden, dass die Schaltwalze unterschiedlich schnell verdrehbar ist, so dass eine Zielwahl sowohl für Hochschaltungen als auch für Rückschaltungen als Funktion der Drehzahl der Schaltwalze und unter Ausnutzung der dabei auftretenden Fliehkraft ermöglicht wird.

Erfindungsgemäß ist im Rahmen einer bevorzugen Ausführungsform der vorliegenden Erfindung vorgesehen, dass auf dem äußeren Umfang der Schaltwalze Wippenelemente angeordnet sind, die keilförmige Spitzen aufweisen und die auf einer Drehachse derart gelagert sind, dass die keilförmigen Spitzen in die zugehörige Nut eingreifen können, wobei die Drehachse senkrecht zur Nut angeordnet ist und wobei auf einer Seite der Drehachse des Wippenelementes eine Druckfeder angeordnet ist. Dadurch bestimmen die keilförmigen Spitzen der Wippenelemente den Weg des Schaltfingers sowohl bei Hochschaltungen als auch bei Rückschaltungen. Die das Wippenelement beaufschlagende Druckfeder sorgt dafür, dass bei langsamen Verdrehungen der Schaltwalze die keilförmige Spitze des Wippenelementes in die Nut eingreift, wodurch, wenn sich die Schaltgabel mit dem Schaltfinger in der Neutralstellung befindet und die Schaltwalze zurück gedreht wird, der Schaltfinger wie bei den herkömmlichen Schaltvorrichtungen aus der Neutralnut in die (schräge) Gangnut überführt wird, so dass der Gang eingelegt wird.

Bei schneller Rückdrehung der Schaltwalze hingegen wird durch die senkrecht zur Nut angeordnete Drehachse für das Wippenelement bewirkt, dass auf Grund der auftretenden Fliehkraft ein Moment auf das Wippenelement einwirkt, das der Federkraft entgegen gesetzt ist. Dadurch wird das Wippenelement um seine Drehachse verschwenkt, so dass die keilförmigen Spitzen außer Eingriff mit der Nut gelangen, mit der Folge, dass der Schaltfinger nicht mehr abgewiesen und in Richtung Gangnut geführt wird, sondern in der Neutralstellung verbleibt.

Bei Hochschaltungen kehrt sich das Wirkprinzip auf Grund der asymmetrischen Anordnung des Wippenelementes um, das heißt, das bei langsamer Verdrehung der Schaltwalze der Schaltfinger in der Neutralstellung verbleibt und bei schneller Verdrehung in die Gangnut abgewiesen wird.

Die erfindungsgemäße Ausgestaltung der Schaltvorrichtung bietet mehrere Vorteile. Zum einen kann auf einen zusätzlichen Aktuator verzichtet werden, da nunmehr eine "passive" Ausnutzung der Fliehkraft dahingehend erfolgt, dass die Gänge sowohl bei Hochschaltungen als auch bei Rückschaltungen frei wählbar sind, so dass ein sequentieller Schaltablauf vermieden werden kann. Zum anderen muss die Schaltwalze weder einen Mehrweg zurücklegen, noch eine Richtungsumkehr durchführen, so dass keine größeren Wege in Kauf zu nehmen sind.

Bei Einfachschaltungen wird wegen des gleichen Schaltablaufs die gleiche Schaltzeit benötigt wie bei den herkömmlichen Schaltvorrichtungen mit Schaltwalze. Bei Mehrfachschaltungen wird der Zielgang direkt ohne Mehrweg und ohne Drehrichtungsumkehr der Schaltwalze angefahren. Damit wird eine deutliche Verringerung der Schaltzeiten durch Wegfall des nicht mehr erforderlichen Zwischensynchronisierens erzielt.

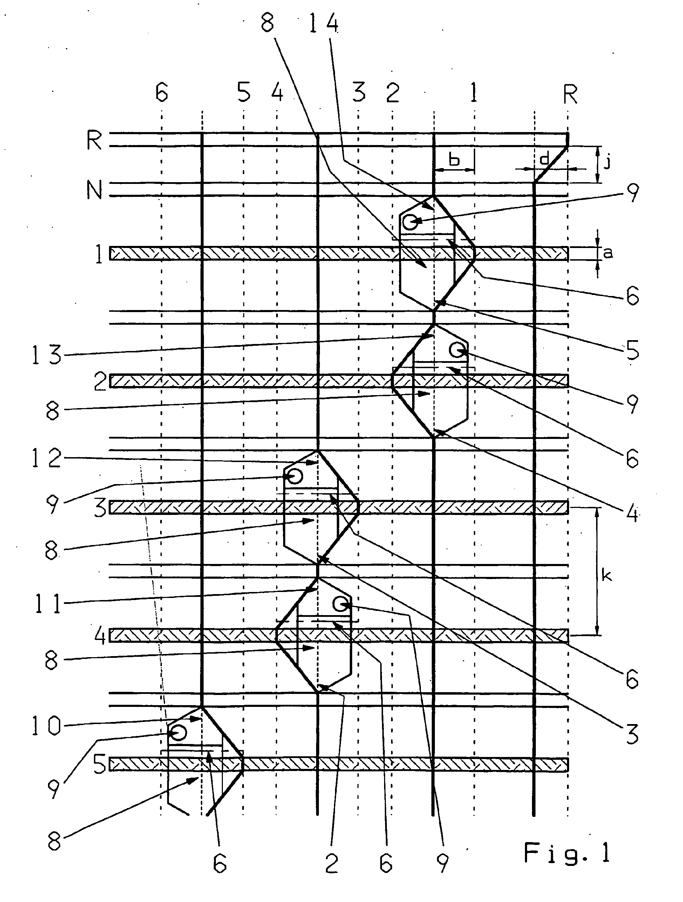

Im Folgenden wird die Erfindung anhand der Zeichnung näher erläutert, wobei in der einzigen Figur eine Abwicklung einer Schaltwalze dargestellt ist.

Dä Schaltvorrichtungen mit Schaltwalzen dem Fachmann gut bekannt sind, sind in der Zeichnung nur die für das Verständnis der erforderlichen Bauteile rein schematisch dargestellt.

Die auf dem äußeren Umfang der Schaltwalze angeordneten Wippenelemente sind mit 8 bezeichnet, wobei sie um eine Drehachse 6 verschwenkbar sind, welche senkrecht zu der zugehörigen Nut angeordnet ist. Jede Nut der Schaltwalze weist eine umlaufende Neutralnut auf, die mit der entsprechenden Gangnut verbunden ist. Die Wippelemente 8 sind auf einer Seite mit keilförmigen Spitzen 1, 2, 3, 4, 5 und auf der anderen Seite mit keilförmigen Spitzen 10, 11, 12, 13, 14 versehen und derart angeordnet, dass die keilförmigen Spitzen 1, 2, 3, 4, 5 den Weg des Schaltfingers bei Hochschaltungen und bei Rückschaltungen bestimmen. Zu diesem Zweck ist auf der einen Seite der Drehachse 6 eines jeden Wippenelementes 8 eine Druckfeder 9 vorgesehen, die das Wippenelement dahingehend beaufschlagt, dass diese keilförmige Spitze in die Nut eintaucht.

Die Kraft der Feder 9 ist derart bemessen, dass bei einer langsamen Verdrehung der Schaltwalze dieses Eintauchen der keilförmigen Spitze aufrecht erhalten bleibt, so dass, wenn sich die Schaltgabel mit dem zugehörigen Schaltfinger in der Neutralstellung befindet und die Schaltwalze zurück gedreht wird, der Schaltfinger aus der Neutralnut abgewiesen und in die Gangnut überführt wird, wie es auch bei den herkömmlichen Schaltvorrichtungen mit Schaltwalze der Fäll ist.

Bei einer schnellen Rückdrehung der Schaltwalze hingegen wird aufgrund der asymmetrischen Anordnung des Wippen-Elementes 8 auf seiner Drehachse 6 durch die auftretende Fliehkraft ein Moment auf des Wippenelement ausgeübt, das der Kraft der Feder 9 entgegen wirkt, so dass das Wippenelement verschwenkt wird und seine keilförmige Spitze nicht mehr in die Nut eintaucht. Dadurch wird der Schaltfinger nicht mehr abgewiesen, sondern verbleibt in der Neutralstellung bei schneller Rückdrehung der Schaltwalze.

Dieses Wirkprinzip kehrt sich bei den Hochschaltungen um, so dass in diesen Fällen der Schaltfinger bei einer langsamen Verdrehung der Schaltwalze in der Neutralstellung verbleibt, bei einer schnellen Verdrehung der Schaltwalze hingegen in Richtung der Schaltnut abgewiesen wird.

Im Folgenden wird die Funktionsweise der erfihdungsgemäßen Schaltvorrichtung im Einzelnen erläutert:

### Einfachrückschaltung

Die Schaltwalze wird langsam zurückgedreht, wobei die Kraft der Druckfeder 9 größer ist als das durch die Fliehkraft hervorgerufene Moment, so dass die keilförmigen Abweisspitze 1, 2, 3, 4, 5 des Wippenelementes 8 im Nuteingriff verbleibt und sequentiell geschaltet wird. Dies ist immer dann der Fall, wenn die Federkraft nicht durch die Fliehkraft überwunden wird.

### Mehrfach-Rückschaltung (Doppelrückschaltung)

Die Schaltwalze wird zunachst schnell zurückgedreht. Dabei ist die keilförmige Spitze 1, 2, 3, 4, 5 des Wippenelements 8 nicht im Nuteingriff, so dass der Schaltfinger in der Neutralstellung verbleibt. Nach dem Passieren des entsprechenden Wippenelementes 8 ( vor dem Zielgang ) wird die Drehzahl der Schaltwalze so weit reduziert, dass alle Wippenelemente wieder im Nuteingriff sind. Der Schaltfinger wird nunmehr in die Gangnut abgewiesen und der entsprechende Gang geschaltet.

### Einfachhochschaltung

Die Schaltwalze wird schnell verdreht, so dass die Wippenelemente 8 über ihre keilförmigen Spitzen 10, 11, 12, 13, 14 im Nuteingriff sind und die Schaltung sequentiell abläuft.

### Mehrfachhochschaltung (Doppelhochschaltung)

Die Schaltwalze wird langsam in Hochschaltrichtung verdreht, so dass die keilförmigen Abweisspitzen 10, 11, 12, 13, 14 nicht im Nuteingriff sind und der Schaltfinger in der Neutralstellung verbleibt. Bevor der Zielgang geschaltet wird, wird die Schaltwalze schnell verdreht, so dass nunmehr die Spitzen 10, 11, 12, 13, 14 im Nuteingriff sind. Dadurch kann der Schaltfinger in die Gangnut abgewiesen werden und der Gang geschaltet werden.

Die erfindungsgemäße Ausgestaltung der Schaltvorrichtung ermöglicht also eine passiv geregelte freie Zielwahl sowohl für Hochschaltungen als auch für Rückschaltungen als Funktion der Drehzahl der Schaltwalze und unter Ausnutzung der dabei auftretenden Fliehkraft. Obwohl ein besonders vorteilhaftes Ausführungsbeispiel detailliert beschrieben wurde kann die der Erfindung zugrundeliegende Idee mit weiteren geeigneten Mitteln realisiert werden.

### Bezugszeichen

- 1: Spitze
- 2: Spitze
- 3: Spitze
- 4: Spitze
- 5: Spitze
- 6: Drehachse
- 8: Wippenelement
- 9: Druckfeder
- 10: Spitze
- 11: Spitze
- 12: Spitze
- 13: Spitze
- 14: Spitze

## Patentansprüche

1. Schaltvorrichtung für ein Getriebe mit einem Kurventrieb, der eine um eine Achse drehbar geführte Schaltwalze mit Nuten aufweist, sowie Schaltfinger, die in die Nuten eingreifen und in diesen geführt werden, **dadurch gekennzeichnet, dass** die Schaltwalze derart ausgebildet ist, dass sie unterschiedlich schnell verdrehbar ist, so dass eine Zielwahl sowohl für Hochschaltungen als auch für Rückschaltungen als Funktion der Drehzahl der Schaltwalze und unter Ausnutzung der dabei auftretenden Fliehkraft ermöglicht wird.

2. Schaltvorrichtung nach Anspruch 1, **dadurch gekennzeichnet, dass** auf dem äußeren Umfang der Schaltwalze Wippenelemente (8) auf Drehachsen (6) gelagert sind, die an beiden Enden mit keilförmigen Spitzen (1, 2, 3, 4, 5; 10, 11, 12, 13, 14) versehen sind und dass auf einer Seite der Drehachse (6) eine Druckfeder (9) angeordnet ist, die das Wippenelement (8) in Richtung Nuteingriff durch die keilförmige Spitze (1, 2, 3, 4, 5) beaufschlagt, die an dem der Feder (9) abgewandten Ende des Wippenelementes (8) vorgesehen ist.

3. Schaltvorrichtung nach Anspruch 2, **dadurch gekennzeichnet, dass** jeder Gangnut der schaltwalze eine mit ihr verbundene, umlaufende Neutralnut zugeordnet ist.

## Claims

1. Shift device for a transmission with a cam drive comprising a shift roller which is rotatable about an axis and has grooves and comprising shift fingers which engage into and are guided in the grooves, **characterized in that** the shift roller is designed such that it can rotate at different speeds, so as to enable a target selection both for upshifts and also for downshifts as a function of the rotational speed of the shift roller and utilizing the occurring centrifugal force.

2. Shift device according to Claim 1, **characterized in that,** on the outer circumference of the shift roller, rocker elements (8) are mounted on rotary axles (6), which rocker elements (8) are provided at both ends with wedge-shaped tips (1, 2, 3, 4, 5; 10, 11, 12, 13, 14), and **in that** a pressure spring (9) is arranged on one side of the rotary axle (6), which pressure spring (9) loads the rocker element (8) in the direction of engagement with the groove by means of the wedge-shaped tip (1, 2, 3, 4, 5) which is provided at that end of the rocker element (8) which faces away from the spring (9).

3. Shift device according to Claim 2, **characterized in that** each gear groove of the shift roller is assigned an encircling neutral groove connected to said gear groove.

## Revendications

1. Dispositif de changement de vitesse pour une boîte de vitesses avec un mécanisme de commande par came qui présente un tambour de changement de vitesse guidé à rotation autour d'un axe, avec des rainures, ainsi que des doigts de changement de vitesse qui viennent en prise dans les rainures et qui sont guidés dans celles-ci, **caractérisé en ce que** le tambour de changement de vitesse est réalisé de telle sorte qu'il puisse tourner à des vitesses différentes de sorte qu'une sélection spécifique soit possible à la fois pour des passages à des vitesses supérieures et pour des rétrogradages, en fonction de la vitesse de rotation du tambour de changement de vitesse et en utilisant la force centrifuge se produisant dans ce cas.

2. Dispositif de changement de vitesse selon la revendication 1, **caractérisé en ce que** sur la périphérie extérieure du tambour de changement de vitesse, sont montés des éléments à bascule (8) sur des axes de rotation (6), qui sont pourvus aux deux extrémités de pointes en forme de cales (1, 2, 3, 4, 5 ; 10, 11, 12, 13, 14) et **en ce que** d'un côté de l'axe de rotation (6) est disposé un ressort de pression (9) qui sollicite l'élément à bascule (8) dans la direction de l'engagement des rainures par la pointe en forme de cale (1 , 2, 3, 4, 5), qui est prévue à l'extrémité de l'élément à bascule (8) opposée au ressort (9).

3. Dispositif de changement de vitesse selon la revendication 2, **caractérisé en ce que** chaque rainure de vitesse du tambour de changement de vitesse est associée à une rainure neutre périphérique qui est connectée à celui-ci.
